# EUROPÄISCHE PATENTSCHRIFT

(11) **EP 0 644 915 B1**
(45) Veröffentlichungstag und Bekanntmachung des Hinweises auf die Patenterteilung: **22.01.1997**
(21) Anmeldenummer: 93912845.0
(22) Anmeldetag: 01.06.1993
(51) Int. Cl.: C08K 3/22

(54) **VERWENDUNG VON KATOITEN ALS STABILISATOREN FÜR POLYMERE**
USE OF CATOITES AS STABILIZERS FOR POLYMERS
UTILISATION DE CATOITES COMME STABILISANTS DE POLYMERES

(30) Priorität: 09.06.1992 DE 4218831
(43) Veröffentlichungstag der Anmeldung: 29.03.1995
(73) Patentinhaber: Henkel Kommanditgesellschaft auf Aktien, 40191 Düsseldorf (DE)
(72) Erfinder: KUHM, Peter, D-4010 Hilden (DE); ENDRES, Helmut, D-4018 Langenfeld (DE); LÖFFELHOLZ, Frido, D-2850 Bremerhaven (DE); WEDL, Peter, D-2850 Bremerhaven (DE); WORSCHECH, Kurt, D-2854 Loxstedt (DE); WEGEMUND, Bernd, D-5657 Haan 1 (DE)
(86) Internationale Anmeldenummer: EP9301373
(87) Internationale Veröffentlichungsnummer: WO9325613

(56) Entgegenhaltungen:
- DE-A- 2 424 763
- ACTA CRYST. Bd. 23, 1967, Seiten 220-230 C. COHEN-ADDAD, P. DUCROS 'Etude de la Substitution du Groupement SiO4 par (OH)4 dans les Composés Al2Ca3(OH)12 et Al2Ca3(SiO4)2,16(OH)3,36 de Type Grenat' in der Anmeldung erwähnt

## Beschreibung

Gegenstand der vorliegenden Erfindung ist die Verwendung von Katoiten der Formel (I) Ca₃Al₂(OH)₁₂ (I) als Stabilisator für Polymere auf Basis chlorhaltiger Olefine, ein Verfahren zur Stabilisierung derartiger Polymere und eine Stabilisatormischung enthaltend Zinkseifen, Calciumseifen und/oder Calcium- Komplexe von 1,3-Diketonen und Katoite der Formel (I).

Halogenhaltige Kunststoffe oder daraus hergestellte Formmassen neigen bekanntermaßen unter Hitzebedingungen oder bei der Einwirkung von UV-Licht zur Chlorwasserstoff-Abspaltung, was Zersetzung und Farbänderungen des halogenhaltigen Kunststoffes bedingt. Um dem entgegenzuwirken, werden bis heute die traditionellen Schwermetallverbindungen auf Basis von Blei, Barium und/oder Cadmium eingesetzt. Aus arbeitsphysiologischer und ökologischer Sicht besteht jedoch ein Bedürfnis, diese durchaus wirkungsvollen Stabilisatoren durch weniger gefährdende Stoffe zu ersetzen. Als Ersatz haben sich in letzter Zeit Stabilisatormischungen mit Calcium- und Zinkseifen etabliert, die aber stets zusätzliche Stabilisatoren oder Co-Stabilisatoren enthalten, damit das Leistungsvermögen der traditionellen Schwermetallverbindungen wie der des Bleis erreicht wird. So wird in der deutschen Patentschrift DE-C-3019632 vorgeschlagen, als zusätzliche Stabilisatoren Hydrotalcite mit einer spezifischen Oberfläche nach BET unter 30 m2/g zu verwenden. In der europäischen Offenlegungsschrift EP-A-189899 werden diese Hydrotalcite oberflächenmodifiziert mit Fettsäureester, anionischen Tensiden oder Kupplungsmittel der Silan- und Titan-Typen, um die Kompatibilität des Hydrotalcits mit den Kunststoffmassen zu erhöhen. Leider sind Hydrotalcite aber recht teuer.

Aus der deutschen Patentschrift DE-C-2716389 sind Stabilisatorkombinationen bekannt, die außer Calciumseifen den Magnesiumkomplex eines 1,3-Diketons und Calciumsilikate, -titanate oder -aluminate enthalten. Als Beispiel für ein geeignetes Calciumaluminat wird unter anderem 3CaO·Al₂O₃ aufgeführt, das durch ein Kalzinierungsverfahren hergestellt worden ist. In dieser Patentschrift wird zwar erwähnt, daß die Hydrate der Calciumsilikate, -titanate und -aluminate auch verwendet werden können, aber diese Hydrate werden weder konkret genannt noch findet sich ein Beispiel mit Hydraten. Auch in der deutschen Auslegeschrift DE-B-2553409 wird beschrieben, daß Calciumtitante, -silikate oder -aluminate, die mit einer organischen Siliziumverbindung beschichtet sind, oder deren Hydrate als Stabilisatoren für PVC geeignet sind. Aber auch hier findet sich weder ein Beispiel noch ein Hinweis, welche von den verschiedenen möglichen Hydraten gemeint sind. Demnach können aus den beiden Schriften lediglich Aussagen zu den Calcium-Aluminium-Oxiden entnommen werden. Derartige Oxide sind aber nur schlecht in chlorhaltigen Polymeren dispergierbar, so daß ihre Einarbeitung einen hohen Aufwand erfordert. Vor allem bei einem etwas größeren Anteil dieser Oxide werden zusätzlich die Verarbeitungseigenschaften verschlechtert.

In der deutschen Patentschrift DE-C-2424763 wird das kristallwasserhaltige Calcium-Aluminium-Oxid der Formel 3CaO·Al₂O₃·6 H₂O beschrieben, dessen Oberfläche zur besseren Dispergierbarkeit mit Fettsäuren, Estern oder Alkylnaphthalinsulfonaten überzogen sein kann. Gemäß der deutschen Patentschrift DE-C-24 24 763 soll das Calcium-Aluminium-Oxid zur feuerfesten Ausrüstung von Harzmassen verwendet werden, daher wird es in Mengen von 50 bis 300 Gewichtsteilen zugegeben.

Der Erfindung liegt die Aufgabe zugrunde, einen Stabilisator für Polymere auf Basis chlorhaltiger Olefine bereitzustellen, der die Zersetzungserscheinungen und Farbveränderungen der Polymere reduziert. Vor allem sollte eine helle Anfangsfarbe während der Verarbeitung gewährleistet sein, die zudem lange bestehen soll, damit das chlorhaltige Polymer häufig recycelt werden kann. Des weiteren sollten die Stabilisatoren gut in dem Polymer dispergiert werden können.

Überraschenderweise wurde diese Aufgabe gelöst durch die Verwendung von Katoiten der Formel Ca₃Al₂(OH)₁₂ (I) in Stabilisatormischungen für derartige Polymere.

Gegenstand der Erfindung ist dementsprechend die Verwendung von Katoiten der Formel Ca₃Al₂(OH)₁₂ (I) zur Stabilisierung von Polymeren auf Basis chlorhaltiger Olefine, dadurch gekennzeichnet, daß die Katoite der Formel (I), die gegebenenfalls oberflächenmodifiziert sind, in Stabilisatormischungen eingesetzt werden, die - jeweils bezogen auf 100 Gewichtsteile Polymer - die folgenden Komponenten enthalten:
- 0,1 bis 10 Gewichtsteile Katoit,
- 0,2 bis 4 Gewichtsteile Zinkseife von C₆₋₂₂-Fettsäuren
   sowie
- 0,1 bis 1 Gewichtsteile Calciumseife von C₈₋₂₂-Fettsäuren und/oder 0,1 bis 4 Gewichtsteile Calcium-Komplexe von 1,3-Diketonen.

Die im Sinne der Erfindung verwendeten Katoite der Formel (I) haben ein ganz bestimmtes Kristallgitter, wodurch sie sich von anderen Calcium-Aluminium-Hydroxyverbindungen unterscheiden. Dieses Kristallgitter samt Gitterabständen wird in dem Artikel von C. Cohen-Addad et P. Ducros in Acta Cryst. (1967), 23, Seite 220 bis 225, beschrieben. Demnach handelt es sich um einen kubisches Kristallgitter. Das Aluminium wird oktaedrisch umgeben von sechs Sauerstoffen, die je noch einen Wasserstoff tragen. Das Calcium ist von 8 Sauerstoffen umgeben, die einen gestörten Kubus bilden, der auch als triangularer Dodekaeder bezeichnet wird.

Die Katoite der Formel (I) können beispielsweise in Anlehnung an die deutsche Patentschrift DE-C-2424763 aus den Hydroxiden des Calciums und Aluminiums in entsprechenden stöchiometrischen Mengen im wäßrigen System hergestellt werden. Nach eigenen Erkenntnissen fallen je nach Versuchstemperaturen und Reaktionszeiten Katoite mit unterschiedlichen mittleren Teilchendurchmessern an. Bevorzugt werden Temperaturen im Bereich von 50 bis 150 °C und Reaktionszeiten von 0,1 bis 9 Stunden. Dabei fallen die Katoite mit mittleren Teilchendurchmessern von 0,1 µm bis 100 µm, vorzugsweise 0,5 bis 30 µm an. Die mittleren Teilchendurchmesser wurden bestimmt nach der Laserbeugungsmethode mit dem Gerät Sympathex Helos.

Sofern Reaktionszeiten bzw. Reaktionstemperaturen des unteren angegebenen Bereichs gewählt werden, kann es vorkommen, daß als Nebenprodukt geringe Mengen an calciumhaltigen Hydroxyaluminaten (Hydrocalumite) anfallen, die eine Schichtstruktur aufweisen und in etwa durch die Formel [Ca₂Al(OH)₆](OH)·x H₂O beschrieben werden. Auch derartige Mischungen sind im Sinne der Erfindung als Stabilisator geeignet, wobei die Menge an Hydrocalumiten vorzugsweise unter 15 Gew.-% - bezogen auf Katoit - liegt.

Bei der Herstellung der Katoite können auch Überschüsse von Aluminium- oder Calciumhydroxid eingesetzt werden, wobei Mischungen von nicht umgesetztem Calcium- und/oder Aluminiumhydroxid und Katoit entstehen. Diese Mischungen können ebenfalls im Sinne der Erfindungs verwendet werden, wobei die Menge an Aluminium- und/oder Calciumhydroxid unter 50 Gew.-%, vorzugsweise von 5 bis 30 Gew.-% - bezogen auf Mischung - liegt.

Falls gewünscht, können die Katoite der Formel (I) oberflächenmodifziert sein mit einem oder mehreren Additiven ausgewählt aus den Gruppen
a) ggf. alkoxylierte Alkohole mit einer oder mehreren Hydroxylgruppen
b) teilweise oder vollständig epoxidierte ungesättigte Fettsäuren, Fettalkohole und/oder deren Derivate
c) Voll- und Partialester von Polyolen mit 3 bis 30 C-Atomen und 2 bis 6 Hydroxylgruppen mit Carbonsäuren mit 6 bis 22 C-Atomen
d) Alkyl- und Arylphosphiten
e) Homo- und Mischpolymere von Acrylsäure und Methacrylsäure
f) Lignin- und Naphthalinsulfonate und/oder Trimerfettsäuren
g) Salze von Fettsäuren.

Als Additive kommen in der Gruppe a) sowohl monofunktionelle Alkohole als auch Polyole mit 3 bis 30 C-Atomen und 2 bis 6 Hydroxylgruppen in Betracht, die gewünschtenfalls alkoxyliert, vorzugsweise ethoxyliert sein können. Aus der Gruppe der monofunktionellen Alkohole werden bevorzugt Fettalkohole mit 6 bis 22 C-Atomen eingesetzt, wie Caprin-, Lauryl-, Palmityl-, Stearyl-, Oleyl-, Linoleyl-, Arachidyl- und Behenylalkohol sowie ihre technischen Mischungen wie sie aus natürlichen Ölen und Fetten zugänglich sind. Ganz besonders bevorzugt eingesetzt werden von diesen Fettalkoholen die ethoxylierten Vertreter hiervon mit 2 bis 15 Mol Ethylenoxid. Aus der Gruppe der Polyole eignen sich Diole mit 3 bis 30 C-Atomen, wie Butandiole, Hexandiole, Dodecandiole, sowie Trimethylolpropan, Pentaerythrit, Glycerin und deren technische Oligomerengemische mit durchschnittlichen Kondensationsgraden von 2 bis 10. Ganz besonders bevorzugt werden aus der Gruppe der Polyole solche mit 3 bis 30 C-Atomen, die pro 3 C-Atome mindestens eine Hydroxylgruppe oder einen Ethersauerstoff tragen, vorzugsweise Glycerin und/oder die technischen Oligoglyceringemische mit durchschnittlichen Kondensationsgraden von 2 bis 10.

Bei den Additiven der Gruppe b) handelt es sich um teilweise oder vollständig epoxidierte ungesättigte Fettsäuren oder Fettalkohole mit 6 bis 22 C-Atomen oder Derivate hiervon. Als Derivate der epoxidierten Fettsäuren oder Fettalkohole sind insbesondere die Ester hiervon geeignet, wobei die epoxidierten Fettsäuren und epoxidierten Fettalkohole miteinander verestert sein können oder aber auch mit nicht-epoxidierten Carbonsäuren oder mit nicht-epoxidierten ein- oder mehrwertigen Alkoholen. Die epoxidierten Fettsäuren leiten sich vorzugsweise von der ungesättigten Palmitolein-, Öl-, Elaidin-, Petroselin-, Ricinol-, Linolen-, Gadolein- oder Erucasäure ab, die nach bekannten Verfarhen ganz oder teilweise epoxidiert werden. Die epoxidierten Fettalkohole leiten sich vorzugsweise ab von den ungesättigten Alkoholen Oleyl-, Elaidyl-, Ricinol-, Linoleyl-, Linolenyl-, Gadoleyl-, Arachidon- oder Erucaalkohol ab, die ebenfalls nach bekannten Verfahren ganz oder teilweise epoxidiert werden. Geeignete Ester von epoxidierten Fettsäuren sind Ester von ein-, zwei- und/oder dreiwertigen Alkoholen, die vollständig mit epoxidierten, ungesättigten Carbonsäuren mit 6 bis 22 C-Atomen verestert sind, wie Methyl-, 2-Ethylhexyl-, Ethylenglykol-, Butandiol-, Neopentylglykol-, Glycerin- und/oder Trimethylolpropanester von epoxidierter Lauroleinsäure, Palmitoleinsäure, Ölsäure, Ricinolsäure, Linolsäure und/oder Linolensäure. Bevorzugt werden Ester von dreiwertigen Alkoholen und praktisch vollständig epoxidierten ungesättigten Carbonsäuren mit 12 bis 22 C-Atomen, und insbesondere Ester von Glycerin mit praktisch vollständig epoxidierten ungesättigten Carbonsäuren mit 12 bis 22 C-Atomen. Wie in der Fettchemie üblich, können die epoxidierten Carbonsäureglyceride auch technische Gemische darstellen, wie man sie durch Epoxidation von natürlichen ungesättigten Fetten und ungesättigten Ölen erhält. Vorzugsweise wird epoxidiertes Rüböl, epoxidiertes Sojaöl und epoxidiertes Sonnenblumenöl neuer Züchtung eingesetzt.

Bei den Additiven der Gruppe c) handelt es sich um Voll- oder Partialester, die nach den einschlägigen Methoden der präparativen organischen Chemie, beispielsweise durch säurekatalysierte Umsetzung von Polyolen mit Carbonsäuren erhalten werden. Als Polyolkomponente kommen dabei solche in Betracht, die bereits in Zusammenhang mit der Gruppe a) besprochen wurden. Als Säurekomponente werden bevorzugt aliphatische, gesättigte und/oder ungesättigte Carbonsäuren mit 6 bis 22 C-Atomen wie Capronsäure, Caprylsäure, Caprinsäure, Laurinsäure, Myristinsäure, Palmitinsäure, Palmitoleinsäure, Stearinsäure, Ölsäure, Ricinolsäure, Linolsäure, Linolensäure, Behensäure oder Erucasäure eingesetzt. Wie in der Fettchemie üblich, kann die Carbonsäurekomponente auch ein technisches Gemisch darstellen, wie es bei der Druckspaltung von natürlichen Fetten und Ölen anfällt. Bevorzugt werden Partialester von Glycerin und insbesondere von deren technischen Oligoglyceringemischen mit durchschnittlichen Kondensationsgraden von 2 bis 10 mit gesättigten und/oder ungesättigten aliphatischen Carbonsäuren mit 6 bis 22 C-Atomen.

Schließlich können gemäß Gruppe d) Alkyl- und Arylphosphite eingesetzt werden, vorzugsweise solche der allgemeinen Formel (II) 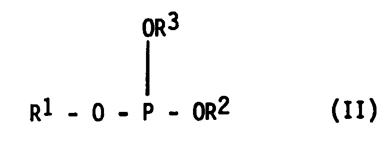 in der R¹, R² und R³ unabhängig voneinander für einen Alkylrest mit 1 bis 18 Kohlenstoffatomen oder einen Phenylrest stehen. Typische Beispiele für Additive der Gruppe d) sind Tributylphosphit, Triphenylphosphit, Dimethylphenylphosphit und/oder Dimethylstearylphosphit. Bevorzugt wird Diphenyldecylphosphit.

Bei den Additiven aus der Gruppe e) handelt es sich bevorzugt um Polymere von Acrylsäure und Methacrylsäure sowie deren Copolymeren. Der Begriff der Copolymere wird in doppeltem Sinne verstanden: einmal als reine Copolymere von Acrylsäure und Methacrylsäure und zum anderen als Copolymere von (Meth)Acrylsäure mit weiteren vinylisch ungesättigten, zur Polymerisation fähigen Monomeren. Beispiele für weitere zur Polymerisation fähige Monomere sind sulfon- und phosphonsäuregruppenhaltige ungesättigte Monomere, ungesättigte aliphatische Carbonsäuren mit 3 bis 5 C-Atomen, Amide von ungesättigten aliphatischen Carbonsäuren mit 3 bis 5 C-Atomen, aminogruppenhaltige ungesättigte Monomere und/oder deren Salze, Vinylacetat, Acrolein, Vinylchlorid, Acrylnitril, Vinylidenchlorid, 1,3-Butadien, Styrol, Alkylstyrole mit 1 bis 4 C-Atomen im Alkylrest. Beispiele für Additive der Gruppe e) sind Polyacrylsäure, Polymethacrylsãure - im folgenden werden Acrylsäure und Methacrylsäure sowie deren Derivate vereinfacht als (Meth)acrylsäure bzw. Derivate abgekürzt -und/oder deren Salze wie Polynatrium(meth)acrylat, Copolymere von (Meth)acrylsäure mit Maleinsäure, Maleinsäureanhydrid, Styrolsulfonsäure, α-Methylstyrol, 2-Vinylpyridin, 1-Vinylimidazol, Dimethylaminopropyl(meth)acrylamid, 2-(Meth)acrylamido-2-methylpropansulfonsäure, (Meth)acrylamid, N-Hydroxydimethyl(meth)acrylamid und/oder deren Salze. Ganz besonders bevorzugt unter den polymeren Additiven sind solche, die einen überwiegend anionischen Charakter aufweisen, das heißt, die mehrheitlich Säuregruppen frei oder in Form ihrer Salze tragen. Insbesondere bevorzugt sind Polymere von (Meth)acrylsäure sowie deren Copolymerisate mit Styrol, Acrolein, Alkylstyrolen mit 1 bis 4 C-Atomen im Alkylrest, Styrolsulfonsäure, Maleinsäure und/oder deren Salze, insbesondere deren Natriumsalze, und Maleinsäureanhydrid. Zweckmäßigerweise besitzen die polymeren Additive der Gruppe e) ein Molekulargewicht von 1000 bis 10000. Die Herstellung der polymeren Additive kann nach bekannten Verfahren wie Substanz- oder Lösungsmittelpolymerisation erfolgen (vergleiche Ullmann's Encyclopädie der technischen Chemie, Band 19, 4. Auflage, Seiten 2-11, 1980).

Die Additive der Gruppe f) sind handelsübliche Produkte. Ein Verfahren zur Herstellung von Ligninsulfonaten wird beispielsweise in Ullmann's Encyclopädie der technischen Chemie, Band 16, 4. Auflage, Seiten 254-257, 1978, beschrieben. Auch Trimerfettsäuren sind handelsübliche Produkte, die als Rückstand bei der Dimerfettsäuredestillation anfallen, wie Pripol^{R} 1040 der Fa. Unichema.

Bei den Additiven der Gruppe g) handelt es sich um Salze von Fettsäuren. Geeignete Fettsäuren wurden bereits im Zusammenhang mit Additiven der Gruppe c) aufgezählt. Bevorzugt werden hier die Alkalisalze der gesättigten Fettsäuren.

Erfindungsgemäß kann ein oder können mehrere Additive aus einer oder mehreren der Gruppen a) bis g) zur Modifizierung der Katoite eingesetzt werden, wobei die Gesamtmenge an Additiv in dem Bereich von 0,1 bis 10 Gew.-% - bezogen auf Katoit - liegt. Bei Kombinationen der polymeren Additive e) mit weiteren Additiven aus der Gruppe a) bis d) und f) bis g) ist es bevorzugt, die polymeren Additive in Mengen von 50 bis 90 Gew.-% - bezogen auf Gesamtadditivmenge - zu haben. Besonders bevorzugt werden von den oberflächenmodifizierten Katoite der Formel (I) solche, die mit einem oder mehreren Additiven aus der Gruppe b), e) und g) modifiziert sind.

Die Modifizierung der Katoite kann entweder in situ erfolgen oder nachträglich.

Bei der nachträglichen Modifizierung werden die Katoite mit organischen oder wäßrigen Lösungen der Additive innigst vermahlen, vorzugsweise mit Mahlkörpermühlen und insbesondere mit einer Kugelmühle und anschließend gewöhnlich getrocknet. Sofern es sich bei den Additiven um bei Raumtemperatur flüssige oder niedrigschmelzende Produkte handelt, muß man natürlich keine Lösungen davon verwenden. Ansonsten verwendet man bei den Additiven a) bis g) am liebsten klare wäßrige Lösungen oder Lösungen mit polaren organischen Lösungsmitteln.

Der Begriff der polaren organischen Lösungsmittel umfaßt bei Raumtemperatur (15 bis 25 °C) flüssige Kohlenwasserstoffverbindungen, die mindestens einen elektronegativeren Substituenten als Kohlenstoff tragen. Dazu zählen Chlorkohlenwasserstoffe, Alkohole, Ketone, Ester, Ether und/oder Glykolether. Geeignete polare organische Lösungsmittel sind Methanol, Ethanol, n-Butanol, Aceton, Methylethylketon, Methylisobutylketon, Cyclohexanol, Isophoron, Ethylacetat, Milchsãureethylester, 2-Methoxyethylacetat, Tetrahydrofuran, Ethylglykolmonomethylether, Diethylenglykolmonoethylether.

Damit die Oberfläche der Katoite gleichmäßig modifiziert werden kann, ist es bei Anwesenheit der Additive der Gruppe e) zweckmäßig, wenn diese löslich sind in polaren organischen Lösungsmitteln der beschriebenen Art und/oder in Wasser mit pH-Werten von 8 bis 12. Der Begriff löslich bedeutet in diesem Zusammenhang, daß die polymeren Additive e) in den polaren organischen Lösungsmitteln und in einer wäßrigen Lösung mit pH 10, eingestellt mit Alkalihydroxiden bei 20 °C, zu mindestens 0,01 Gew.-%, vorzugsweise 0,1 Gew.-%, - bezogen auf Lösung - und insbesondere unter den angegebenen Bedingungen vollständig klar gelöst sind.

Die Modifizierung kann auch in situ erfolgen, das heißt, man kann bereits den Calcium- und Aluminiumhydroxid-Lösungen, aus dem sich der Katoit bildet, die Additive ggf. in Form ihrer Lösungen zusetzen.

Letzendlich kann man aber auch beide Modifzierungsarten kombinieren, was sich für die Modifizierung mit mehreren Additiven empfiehlt, die insbesondere unterschiedliches Lösungsverhalten zeigen.

Die ggf. oberflächenmodifizierten Katoite werden in Mischung mit 0,2 bis 4 Gewichtsteilen Zinkseifen von C₈₋₂₂-Fettsäuren, vorzugsweise von gesättigten, aliphatischen Fettsäuren, auf 100 Gewichtsteile Polymer, verwendet. Von den Zinkseifen werden bevorzugt solche von C₈-C₂₂-Fettsäuren eingesetzt und insbesondere von technischer Stearinsäure, die stets auch erhebliche Mengen an Palmitinsäure enthält. Diese Zinksalze können in an sich bekannter Weise durch Fällung von Zinksalzen mit Monocarbonsäuren oder direkt aus Zinkoxid und Monocarbonsäure hergestellt werden.

Um die Anfangsfarbe der chlorhaltigen Polymer noch weiter zu verbessern, werden die Katoite weiterhin in Mischung mit 0,1 bis 1 Gewichtsteilen Calciumseifen von C₈₋₂₂-Fettsäuren und/oder 0,1 bis 4 Gewichtsteilen Calcium-Komplexen von 1,3-Diketonen auf 100 Gewichtsteile Polymere verwendet.

Bei den Calciumseifen handelt es sich ebenso wie bei den Zinkseifen vorzugsweise um solche von aliphatischen C₈₋₂₂ gesättigten Fettsäuren, bevorzugt von Fettsäuren mit 12 bis 22 C-Atomen und insbesondere um technisches Calciumstearat, das Calciumpalmitat enthält.

Die Calcium-Komplexe von 1,3-Diketonen, die im Sinne der Erfindung mitverwendet werden können, werden durch die Formel (III) wiedergegeben

[R¹CO-CH=C(R²)-O]ₓ Ca(OH)_{y} (III)

in der
- R¹ und R²: gleiche oder verschiedene Alkylreste mit 1 bis 4 C-Atomen, Phenyl- oder p-Chlorphenylreste,
- x: einen Wert von 1 bis 2,
- y: einen Wert von 0 bis 1, unter der Bedingung, daß x+y=2,
bedeutet.

Die Calcium-Komplexe von 1,3-Diketonen stellen neutrale (x = 2, y = 0) oder basische (x = 1, y = 1) Verbindungen dar. Die Gruppen R¹ und R² können einen Methyl-, Ethyl-, Propyl-, Butyl-, Phenyl- oder p-Chlorphenylrest bedeuten. Bevorzugt wird ein Calcium-Komplex der Formel (III), in der die Gruppen R¹ und R² gleich sind und einen Methylrest bedeuten, y = 0 und x = 2 ist, das heißt Calciumacetylacetonat, welches aus einem Mol Calciumhydroxid und 2 Mol Acetylaceton erhältlich ist. In der deutschen Offenlegungsschrift DE-A- 38 11 493 werden derartige Ca-Komplexe bereits beschrieben.

Weitere Bestandteile können sein Co-Stabilisatoren wie β-Diketone und Polyole. Geeignete β-Diketone sind Benzoylaceton, Stearoylbenzoylmethan, Palmitoylbenzoylmethan, 4-Methoxybenzoylbenzoylmethan, Acetylaceton, Stearylaceton. Geeignete Polyole sind Polyole mit 2 bis 32 C-Atomen und 2 bis 6 primären Hydroxylgruppen wie Propylenglykol, Neopentylglykol, Trimethylolpropan, Pentaerythrit, Glycerin sowie technische Oligomerengemische des Glycerins und/oder hydroxylgruppenhaltige Isocyanurate wie Tris(2-hydroxylethyl)isocyanurat. Zudem können Antioxidantien mitverwendet werden wie Ester der phosphorigen Säure mit Alkanolen, Phenolen oder Polyolen und Gleitmittel wie Partialester von Polyolen mit 2 bis 32 C-Atomen und 2 bis 6 Hydroxylgruppen und Monocarbonsäuren mit 6 bis 22 C-Atomen oder Fettsäureester. Des weiteren können Weichmacher, wie epoxidierte Pflanzenöle oder Phthalate, Schlagzähigkeitsverbesser wie Copolymere auf Basis (Meth) Acrylsäureester-Co-Butadien-Co-Styrol, Flow-improver, wie Methacrylsäureestercopolymere, Pigmente und Füllstoffe oder auch Flammschutzmittel mitverwendet werden.

Die praktische Anwendung der ggf. oberflächenmodifizierten Katoite erfolgt in Mengen von 0,1 bis 10, vorzugsweise 1 bis 5 Gewichtsteilen auf 100 Gewichtsteile chlorhaltige Polymere.

Unter den Synonymen "chlorhaltiges Polymer" bzw. "Polymer auf Basis chlorhaltiger Olefine" werden sowohl Homopolymere des Vinylchlorids (PVC) als auch Copolymere mit anderen Vinylverbindungen wie Vinylester, Vinylether oder Acrylate, verstanden. Beim PVC selber kommen solche mit K-Werten im Bereich von 50 bis 80 in Betracht, die durch Emulsions-, Suspensions- und Massepolymerisation hergestellt worden sind.

Zu diesen chlorhaltigen Polymeren werden die ggf. oberflächenmodifizierten Katoite in Mischung mit Zn-Seifen, Ca-Seifen und Ca-Komplexen von 1,3-Diketonen, sowie ggf. in Mischung mit weiteren Bestandteilen gegeben, wobei sie einzeln nacheinander oder zusammen zu den chlorhaltigen Polymeren gegeben werden können, vorzugsweise zu PVC.

Ein weiterer Gegenstand der Erfindung ist ein Verfahren zur Stabilisierung von chlorhaltigen Polymeren auf Basis von chlorhaltigen Olefinen, dadurch gekennzeichnet, daß man vor der thermoplastischen Verformung der chlorhaltigen Polymeren die chlorhaltigen Polymere mit gegebenenfalls oberflächenmodifizierten Katoiten der Formel Ca₃Al₂(OH)₁₂ (I) sowie den weiteren Züsatzstoffen der Beschriebenen Art vermischt.

Die Katoite sowie die weiteren Zusatzstoffe der beschriebenen Art werden zweckmäßigerweise den Pulvern oder Granulaten der chlorhaltigen Polymere zugegeben und mit einem Fluid-Mixer vorgemischt, bevor die eigentliche thermoplastische Verformung, wie Extrusion oder Spritzguß, erfolgt.

Ein weiterer Gegenstand ist eine Stabilisatormischung für Polymere auf Basis chlorhaltiger Olefine enthaltend, auf 100 Gewichtsteile Polymer,
- 0,2 bis 4 Gewichtsteile Zinkseifen von C₈₋₂₂-Fettsäuren
- 0,1 bis 1 Gewichtsteile Calciumseiten von C₈₋₂₂-Fettsäuren und/oder 0,1 bis 4 Gewichtsteile Calcium-Komplexe von 1,3-Diketonen
- 0,1 bis 10 Gewichtsteile Katoite der Formel (I) Ca₃Al₂(OH)₁₂.

### Beispiele

### A) Herstellung der Katoite

**Beispiel 1**
   300 g (4 mol) Calciumhydroxid und 233,4 g (2,7 mol bezogen auf Al(OH)₃) kristallines Aluminiumhydroxid (Gehalt an Al(OH)₃ = 90,24 Gew.-%; 9,7 Gew.-% Wasser) wurden in 1300 g Wasser suspendiert und bei 90 °C 3 Stunden gerührt. Anschließend wurde der Feststoff abfiltriert, mit Wasser gewaschen und bei 110 °C getrocknet.
   Analyse des Festoffes mittels Röntgenbeugungsanalyse (RBA):
   über 75 Gew.-% Katoit Ca₃Al₂(OH)₁₂, der Rest ist unumgesetztes Ca(OH)₂ und Al(OH)₃.
   Identifizierung von Katoit mit Röntgenpulverdiagramm (Cu-K α-Strahlung) bei 2 θ = 17,25; 31,84; 39,1; 44,4 im Intensitätsverhältnis 85:76:94:87.
   Mittlere Teilchengröße, bestimmt mit Laserbeugungsmethode mit dem Gerät Sympathec Helos: 8,1 µm.
**Beispiel 2**
   143,3 g (1,93 mol) Ca(OH)₂ und 399,2 g (1,33 mol bezogen auf Al) Aluminiumhydroxid (Wet-Gel Typ A 681^{R} mit etwa 17 Gew.-% Al₂O₃ der Fa. Guilini) wurden in 1,5 kg Wasser suspendiert und bei 90 °C 5 Stunden gerührt. Die Aufbereitung erfolgte analog Beispiel 1.
   Analyse des Feststoffes nach RBA:
   etwa 80 Gew.-% Katoit, der Rest ist CaCO₃.
   Mittlere Teilchengröße 4,9 µm.
**Beispiel 3**
   Analog Beispiel 2, jedoch wurde am Anfang der Reaktion 2 Gew.-% Natriumstearat - bezogen auf die theoretisch anfallende Menge an Katoit - in die Reaktionsmischung gegeben.
   Mittlere Teilchengröße: 15,1 µm.
**Beispiel 4**
   Analog Beispiel 2, jedoch wurde 10 Minuten vor Reaktionsende 2 Gew.-% Natriumstearat - bezogen auf die theoretisch anfallende Menge an Katoit - in die Reaktionsmischung gegeben.
   Mittlere Teilchengröße: 3,5 µm.
**Beispiel 5**
   Analog Beispiel 2, jedoch wurde am Anfang der Reaktion 3 Gew.-% eines Copolymerisats - bezogen auf theoretische Menge Katoit - aus 46 Gew.-% Styrol, 23 Gew.-% α-Methylstyrol und 31 Gew.-% Acrylsäure mit einem Molekulargewicht (Gewichtsmittel) von 6000 (Copolymerisat 1) in die Reaktionsmischung gegeben.
   Mittlere Teilchengröße: 4,0 µm.
**Beispiel 6**
   Analog Beispiel 5, jedoch wurde als Polymerisat eine 50 gew.-%ige wäßrige Lösung eines hydroxylgruppenhaltigen Polyoxymethylencarboxylats, hergestellt durch Oxidation eines Acrolein-Acrylsäure Copolymerisats, POC HS 0010^{R}, Fa. Degussa. (Copolymerisat 2) zugegeben.
**Beispiel 7**
   Analog Beispiel 5, jedoch wurde außer dem Copolymerisat 1 zusätzlich 2 Gew.-% Natriumstearat - bezogen auf theoretische Menge an Katoit - zugegen.
   Mittlere Teilchengröße: 3,9 µm.
**Beispiel 8**
   Analog Beispiel 6, jedoch wurde außer dem Copolymerisat 2 zusätzlich 2 Gew.-% Natriumstearat - bezogen auf theoretische Menge an Katoit - zugegeben.
   Mittlere Teilchengröße: 12,9 µm.
**Beispiel 9**
   51,6 g Calciumhydroxid (0,69 mol) und 200 g Aluminiumhydroxid vom Typ Wet-Gel Typ A 661^{R} mit 8,9 Gew.-% Al₂O₃ (0,33 mol bezogen auf Al) wurden in 500 mol Wasser suspendiert und bei 100 °C 6 Stunden gerührt. 10 Minuten vor Reaktionsende wurden 2 g epoxidiertes Sojaöl (Kenndaten: Säurezahl nach DIN 53402 = 0,5, Verseifungszahl nach DIN 53401 = 180, Jodzahl nach DGF, CV 11b = 5, Epoxidsauerstoffgehalt in Gew.-% = 6) zugesetzt.
   Die Aufarbeitung erfolgte analog Beispiel 1.
   Analyse des Feststoffe nach RBA: etwa 75 Gew.-% Katoit, etwa 15 Gew.-% Ca(OH)₂, Rest Hydrocalumit.
   Mittlere Teilchengröße: 3,6 µm.
**Beispiel 10**
   39,0 g Calciumhydroxid (0,52 mol) und 25 g Aluminiumhydroxid mit einem Gehalt an Al₂O₃ von 65,8 Gew.-% (0,3 mol bezogen auf Al) wurden in 500 ml Wasser suspendiert und bei 100 °C 8 Stunden gerührt. 10 Minuten vor Reaktionsende wurden 2 g eines Pentaerythritpalmitatstearatpartialesters (Kenndaten: Säurezahl = 1, Verseifungszahl ungefähr 180, Hydroxylzahl nach DIN 53240 ungefähr 150) zugesetzt. Die Aufarbeitung erfolgte analog Beispiel 1.
   Analyse des Feststoffes nach RBA: etwa 80 Gew.-% Katoit, etwa 10 Gew.-% Ca(OH)₂, etwa 10 Gew.-% Hydrocalumit.
   Mittlere Teilchengröße: 4,1 µm.

### B) Anwendungstest

Untersucht wurde die "statische" Stabilität von Walzfellen, die auf 100 Gewichtsteile (Gew.-Teile) Suspensions-Polyvinylchlorid mit einem K-Wert von 65 eine Stabilisatormischung enthielten von (in Gew.-Teile)
0,25 Calciumacetylacetonat
0,7 technisches Zinkstearat
0,35 technisches Calciumstearat
0,2 Tris(2-hydroxyethyl)isocyanurat
0,05 Stearoylbenzoylmethan
2,5 Katoite nach den Beispielen.
Zusätzlich waren als Schlagzähigkeitsverbesser 8 Gew.-Teile Polyacrylat und als Füllstoffe 4 Gew.-Teile Kreide und 1,0 Gew.-Teile Titandioxid enthalten. Als Vergleich wurde ein Grundansatz gewählt, in der zu dem PVC die gleiche Stabilisatormischung wie oben aufgeführt gegeben wurde, jedoch ohne Katoit.

Die Stabilität der Polyvinylchloridformmasse wurde anhand der statischen Thermostabilität von Walzfellen geprüft. Zu diesem Zweck wurde Stabilisatorgemisch enthaltendende Polyvinylchloridformmasse auf einem Laborwalzwerk der Abmessung 450 x 220 mm (Firma Berstorff) bei einer Walzentemperatur von 170 °C und einer Walzendrehzahl von 12,5 Upm im Gleichlauf im Verlauf von 5 Minuten zu einem Prüffell verarbeitet. Das ca. 0,5 mm dicke Fell wurde zu quadratischen Probestücken mit 10 mm Kantenlänge zerschnitten, die anschließend in einem Trockenschrank mit 6 rotierenden Horden (Heraeus FT 420 R) einer Temperatur von 180 °C ausgesetzt wurden. Im Abstand von 15 Minuten wurden Proben entnommen und deren Farbveränderung begutachtet.

In Tabelle 1 ist zusammengefaßt, wann (in Minuten) die ersten Verfärbungen und Stabilitätsabbrüche auftraten.

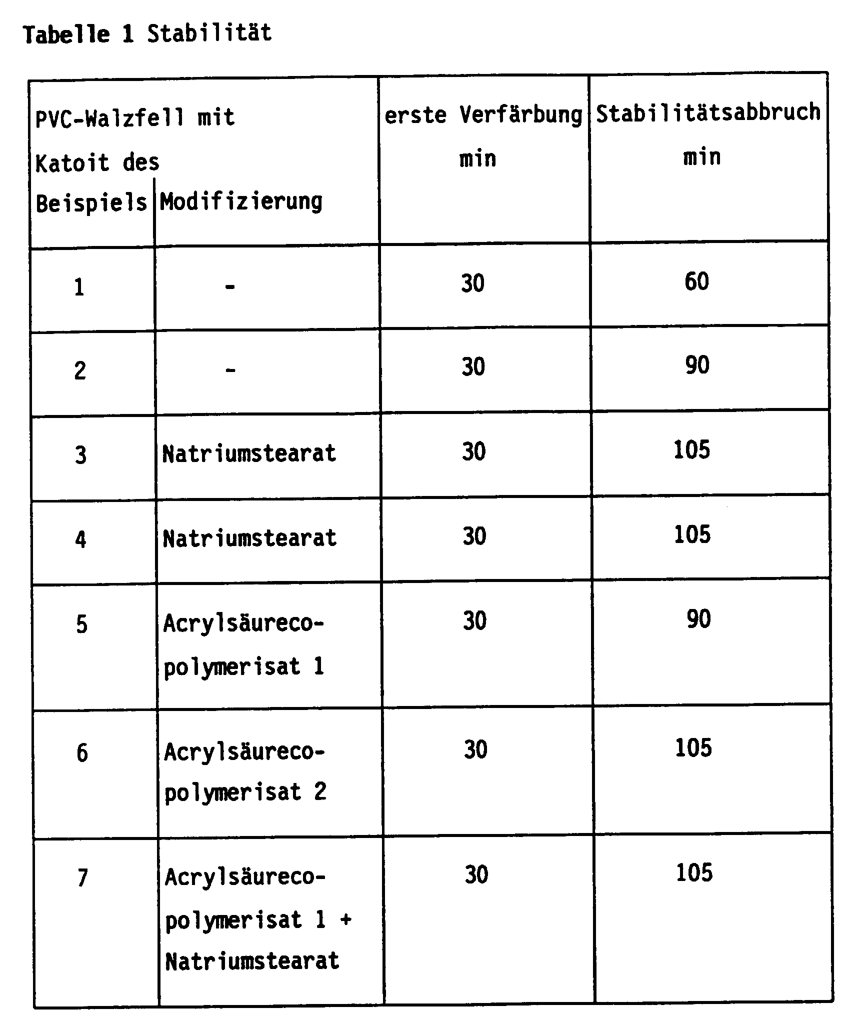

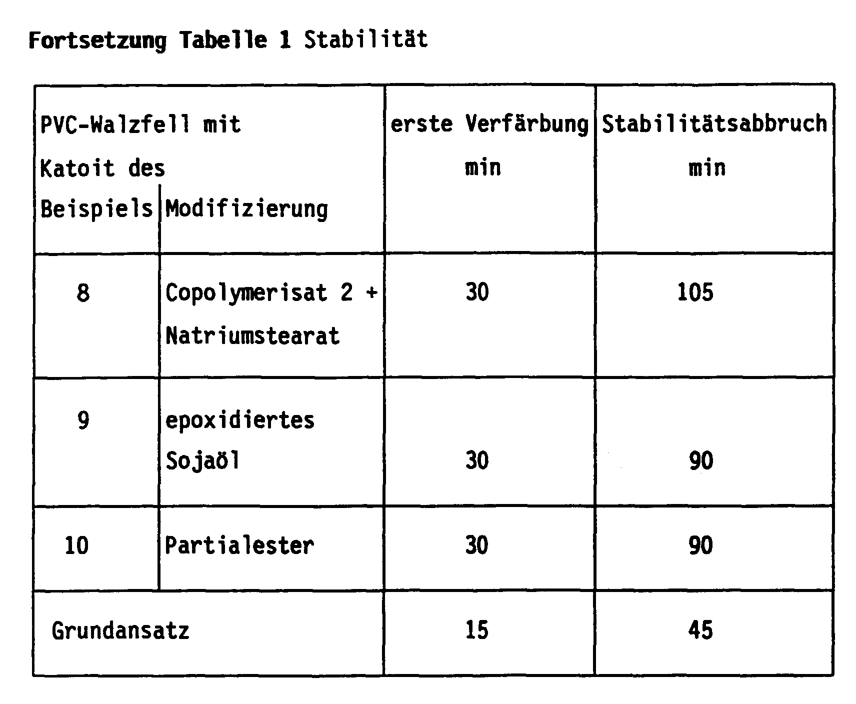

## Patentansprüche

1. Verwendung von Katoiten der Formel Ca₃Al₂(OH)₁₂ (I) zur Stabilisierung von Polymeren auf Basis chlorhaltiger Olefine,
**dadurch gekennzeichnet, daß** die Katoite der Formel (I), die gegebenenfalls oberflächenmodifiziert sind, in Stabilisatormischungen eingesetzt werden, die - jeweils bezogen auf 100 Gewichtsteile Polymer - die folgenden Komponenten enthalten:
- 0,1 bis 10 Gewichtsteile Katoit,
- 0,2 bis 4 Gewichtsteile Zinkseife von C₈₋₂₂-Fettsäuren sowie
- 0,1 bis 1 Gewichtsteile Calciumseife von C₈₋₂₂-Fettsäuren und/oder 0,1 bis 4 Gewichtsteile Calcium-Komplexe von 1,3-Diketonen.

2. Verwendung nach Anspruch 1, dadurch gekennzeichnet, daß die Katoite der Formel (I) einen mittleren Teilchendurchmesser im Bereich von 0,1 bis 100 µm aufweisen.

3. Verwendung nach Anspruch 1, dadurch gekennzeichnet, daß die Katoite der Formel (I) in Mengen von 1 bis 5 Gewichtsteilen auf 100 Gewichtsteile Polymer eingesetzt werden.

4. Verwendung nach Anspruch 1, dadurch gekennzeichnet, daß die Katoite der Formel (I) oberflächenmodifiziert sind mit einem oder mehreren Additiven ausgewählt aus den Gruppen
a) ggf. alkoxylierte Alkohole mit einer oder mehreren Hydroxylgruppen
b) teilweise oder vollständig epoxidierte ungesättigte Fettsäuren, Fettalkohole und/oder deren Derivate
c) Voll- und Partialester von Polyolen mit 3 bis 30 C-Atomen und 2 bis 6 Hydroxylgruppen mit Carbonsäuren mit 6 bis 22 C-Atomen
d) Alkyl- und Arylphosphiten
e) Homo- und Mischpolymere von Acrylsäure und Methacrylsäure
f) Lignin- und Naphthalinsulfonate und/oder Trimerfettsäuren
g) Salze von Fettsäuren.

5. Verwendung nach Anspruch 4, dadurch gekennzeichnet, daß die Katoite der Formel (I) modifiziert sind mit Polyolen, die pro 3 C-Atome mindestens eine Hydroxylgruppe oder einen Ethersauerstoff tragen, vorzugsweise modifiziert mit Glycerin und/oder technischen Oligoglyceringemischen mit durchschnittlichen Kondensationsgraden von 2 bis 10.

6. Verwendung nach Anspruch 4, dadurch gekennzeichnet, daß die Katoite der Formel (I) modifiziert sind mit Homopolymeren von Acrylsäure und Methacrylsäure sowie deren Copolymerisaten mit Styrol, Acrolein, Alkylstyrolen mit 1 bis 4 C-Atomen im Alkylrest, Styrolsulfonsäure, Maleinsäure, Maleinsäureanhydrid und einem Salz der Maleinsäure.

7. Verwendung nach Anspruch 1, dadurch gekennzeichnet, daß die Katoite der Formel (I) in Mischung mit Calcium- und/oder Aluminiumhydroxid in Mengen unter 50 Gew.% - bezogen auf Katoit - eingesetzt werden.

8. Verwendung nach einem oder mehreren der Ansprüche 1 bis 7, dadurch gekennzeichnet, daß die Stabilisatormischungen zur Stabilisierung von Polyvinylchlorid eingesetzt werden.

9. Verfahren zur Stabilisierung von Polymeren auf Basis von chlorhaltigen Olefinen, dadurch gekennzeichnet, daß man vor der thermischen Verformung der Polymeren diese mit den gemäß einem oder mehreren der Ansprüche 1 bis 7 zu verwendenden Stabilisatormischungen vermischt.

10. Stabilisatormischung für Polymere auf Basis chlorhaltiger Olefine, dadurch gekennzeichnet, daß sie - jeweils bezogen auf 100 Gewichtsteile Polymer - die folgenden Komponenten enthalten:
- 0,1 bis 10 Gewichtsteile Katoite der Formel Ca₃Al₂(OH)₁₂ (I), die gegebenenfalls oberflächenmodifiziert sind,
- 0,2 bis 4 Gewichtsteile Zinkseife von C₈₋₂₂-Fettsäuren sowie
- 0,1 bis 1 Gewichtsteile Calciumseife von C₈₋₂₂-Fettsäuren und/oder 0,1 bis 4 Gewichtsteile Calcium-Komplexe von 1,3-Diketonen.

## Claims

1. The use of katoites corresponding to the formula Ca₃Al₂(OH)₁₂ (I) for stabilizing polymers based on chlorine-containing olefins, characterized in that the katoites of formula (I), which are optionally surface-modified, are used in stabilizer mixtures containing the following components (based on 100 parts by weight of polymer):
- 0.1 to 10 parts by weight of katoite,
- 0.2 to 4 parts by weight of zinc soap of C₈₋₂₂ fatty acids and
- 0.1 to 1 part by weight of calcium soap of C₈₋₂₂ fatty acids and/or 0.1 to 4 parts by weight of calcium complexes of 1,3-diketones.

2. The use claimed in claim 1, characterized in that the katoites of formula (I) have an average particle diameter of 0.1 to 100 µm.

3. The use claimed in claim 1, characterized in that the katoites of formula (I) are used in quantities of 1 to 5 parts by weight to 100 parts by weight of polymer.

4. The use claimed in claim 1, characterized in that the katoites of formula (I) are surface-modified with one or more additives selected from the groups
a) optionally alkoxylated alcohols containing one or more hydroxyl groups,
b) partly or completely epoxidized unsaturated fatty acids, fatty alcohols and/or derivatives thereof,
c) full and partial esters of polyols containing 3 to 30 carbon atoms and 2 to 6 hydroxyl groups with carboxylic acids containing 6 to 22 carbon atoms,
d) alkyl and aryl phosphites,
e) homopolymers and copolymers of acrylic acid and methacrylic acid,
f) lignin and naphthalenesulfonates and/or trimer fatty acids,
g) salts of fatty acids.

5. The use claimed in claim 4, characterized in that the katoites of formula (I) are modified with polyols containing at least one hydroxyl group or one ether oxygen for every 3 carbon atoms, preferably modified with glycerol and/or technical oligoglycerol mixtures with average degrees of condensation of 2 to 10.

6. The use claimed in claim 4, characterized in that the katoites of formula (I) are modified with homopolymers of acrylic acid and methacrylic acid and copolymers thereof with styrene, acrolein, alkyl styrenes containing 1 to 4 carbon atoms in the alkyl group, styrenesulfonic acid, maleic acid, maleic anhydride and a salt of maleic acid.

7. The use claimed in claim 1, characterized in that the katoites of formula (I) are used in the form of a mixture with calcium and/or aluminium hydroxide in quantities below 50% by weight, based on katoite.

8. The use claimed in one or more of claims 1 to 7, characterized in that the stabilizer mixtures are used to stabilize polyvinyl chloride.

9. A process for stabilizing polymers based on chlorine-containing olefins, characterized in that, before thermoforming, the polymers are mixed with the stabilizer mixtures to be used in accordance with one or more of claims 1 to 7.

10. A stabilizer mixture for polymers based on chlorine-containing olefins, characterized in that they contain the following components (based on 100 parts by weight of polymer):
- 0.1 to 10 parts by weight of optionally surface-modified katoites corresponding to the formula Ca₃Al₂(OH)₁₂ (I),
- 0.2 to 4 parts by weight of zinc soap of C₈₋₂₂ fatty acids and
- 0.1 to 1 part by weight of calcium soap of C₈₋₂₂ fatty acids and/or 0.1 to 4 parts by weight of calcium complexes of 1,3-diketones.

## Revendications

1. Utilisation de catoites de formule Ca₃Al₂(OH)₁₂ (I) pour stabiliser des polymères à base d'oléfines contenant du chlore,
caractérisée en ce que
les catoites de formule (I) qui sont modifiés en surface le cas échéant, sont utilisés dans des mélanges de stabilisants qui contiennent, par rapport à 100 parties en poids de polymère les composants suivants :
- 0,1 à 10 parties en poids de catoite,
- 0,2 à 4 parties en poids de savons de zinc d'acides gras en C₆₋₂₂, ainsi que,
- 0,1 à 1 partie en poids de savons de calcium d'acides gras en C₈₋₂₂ et/ou 0,1 à 4 parties en poids de complexes de calcium de 1,3 dicétones.

2. Utilisation selon la revendication 1,
caractérisée en ce que
les catoites de formule (I) présentent un diamètre moyen de particule compris entre 0,1 et 100 µm.

3. Utilisation selon la revendication 1,
caractérisée en ce qu'
on utilise les catoites de formule (I) en des quantités de 1 à 5 parties en poids pour 100 parties en poids de polymère.

4. Utilisation selon la revendication 1,
caractérisée en ce que
les catoites de formule (I) sont modifiés en surface avec un ou plusieurs additifs choisis dans les groupes :
a) des alcools alcoxylés le cas échéant avec un ou plusieurs groupes hydroxyle,
b) des acides gras alcools gras et/ou de leurs dérivés insaturés partiellement ou totalement époxydés,
c) des esters partiels ou complets de polyols ayant 3 à 30 atomes de C et 2 à 6 groupes hydroxyle et d'acides carboxyliques de 6 à 22 atomes de C,
d) des alkyl- et Arylphosphites,
e) des homopolymères et copolymères d'acide acrylique et d'acide méthacrylique,
f) des lignine- et naphtalènesulfonates et/ou des trimères d'acides gras,
g) des sels d'acides gras.

5. Utilisation selon la revendication 4,
caractérisée en ce que
les catoites de formule (I) sont modifiés avec des polyols qui pour 3 atomes de C portent au moins un groupe hydroxyle ou un oxygène éther, modifiés de préférence par de la glycérine et/ou des mélanges d'oligoglycérine technique, avec des degrés de condensation de 2 à 10.

6. Utilisation selon la revendication 4,
caractérisée en ce que
les catoites de formule (I) sont modifiés avec des homopolymères d'acide acrylique et d'acide méthacrylique ainsi que leurs copolymères avec du styrène, de l'acroleine, des alkylstyrènes de 1 à 4 atomes de C dans le radical alkyle, l'acide styrène sulfonique, l'acide maléique, l'anhydride d'acide maléique et un sel de l'acide maléique.

7. Utilisation selon la revendication 1,
caractérisée en ce qu'
on utilise les catoites de formule (I) en mélange avec de l'hydroxyde de calcium et/ou de l'hydroxyde d'aluminium en des quantités inférieures à 50 % en poids, par rapport au catoite.

8. Utilisation selon l'une ou plusieurs des revendications 1 à 7,
caractérisée en ce qu'
on utilise les mélanges de stabilisants pour stabiliser le poly(chlorure de vinyle).

9. Procédé de stabilisation de polymères à base d'oléfines contenant du chlore,
caractérisé en ce qu'
on mélange avant la transformation thermique des polymères ceux-ci avec les mélanges de stabilisants à utiliser selon une ou plusieurs des revendications 1 à 7.

10. Mélange de stabilisants de polymères à base d'oléfines chlorées,
caractérisé en ce qu'
il contient, par rapport à 100 parties en poids de polymère les composants suivants :
- 0,1 à 10 parties en poids de catoite de la formule Ca₃Al₂(OH)₁₂) (1) qui, éventuellement, sont modifiés en surface,
- 0,2 à 4 parties en poids de savons de zinc d'acides gras en C₆₋₂₂, ainsi que,
- 0,1 à 1 partie en poids de savons de calcium d'acides gras en C₈₋₂₂ et/ou 0,1 à 4 parties en poids de complexes de calcium de 1,3 dicétones.
